# EUROPEAN PATENT APPLICATION

(11) **EP 3 816 579 A1**
(43) Date of publication of application: **05.05.2021**
(21) Application number: 19825658.8
(22) Date of filing: 08.05.2019
(51) Int. Cl.: G01C 21/18, G01C 21/26

(54) **INFORMATION PROCESSING DEVICE, INFORMATION PROCESSING METHOD, INFORMATION PROCESSING PROGRAM, AND TERMINAL DEVICE**

(30) Priority: 27.06.2018 JP 2018121488
(71) Applicant: Sony Corporation, 108-0075 Tokyo (JP)
(72) Inventor: ALTINTAS, Ersin, Tokyo 108-0075 (JP)
(74) Representative: 2SPL Patentanwälte PartG mbB
(86) International application number: PCT/JP2019/018373
(87) International publication number: WO 2020/003747

(57) **Abstract**

An information processing device includes a combining processing unit configured to combine a plurality of pieces of direction information detected by direction detection units in a plurality of apparatuses to generate combined direction information.

## Description

### [Technical Field]

The present technology relates to an information processing device, an information processing method, an information processing program, and a terminal apparatus.

### [Background Art]

A terminal apparatus usually carried by a user, such as a smartphone, a so-called wearable device worn by a user at all times, and the like naturally include a function of detecting a direction for a map function, a guidance function, a function of providing information about the surroundings of a current position, and the like (PTL 1).

### [Citation List]

### [Patent Literature]

[PTL 1]
JP 2015-40783A

### [Summary]

### [Technical Problem]

However, the size of a gyro sensor (hereinafter gyro) used for a gyro compass used for direction detection is large or results of the gyro sensor may have errors and thus the accuracy may be insufficient. In addition, a geomagnetic sensor has problems that it is easily affected by electromagnetic fields of wires, steel and electric appliances, and the like and thus errors are generated.

Although a large number of gyros can be mounted in a terminal apparatus in order to improve the accuracy of direction detection, there is a problem that an installation space is limited because the terminal apparatus normally has a small size. Further, installation of a large number of gyros also causes a problem of power consumption increase.

The present technology has been made in view of such problems, and an object thereof is to provide an information processing device, an information processing method, an information processing program, and a terminal apparatus capable of improving the accuracy of direction detection.

### [Solution to Problem]

To accomplish the aforementioned object, a first technology is an information processing device including a combining processing unit which combines a plurality of pieces of direction information detected by direction detection units in a plurality of apparatuses to generate combined direction information.

In addition, a second technology is an information processing method in which a combining processing unit combines a plurality of pieces of direction information detected by direction detection units in a plurality of apparatuses to generate combined direction information.

In addition, a third technology is an information processing program which causes a computer to execute an information processing method in which a combining processing unit combines a plurality of pieces of direction information detected by direction detection units in a plurality of apparatuses to generate combined direction information.

Furthermore, a fourth technology is a terminal apparatus in which a combining processing unit combines a plurality of pieces of direction information detected by direction detection units in a plurality of apparatuses to generate combined direction information.

### [Advantageous Effects of Invention]

According to the present technology, it is possible to improve the accuracy of direction detection. Effects described here are not necessarily limiting, and any effects described in the specification may be obtained.

### [Brief Description of Drawings]

[Fig. 1]

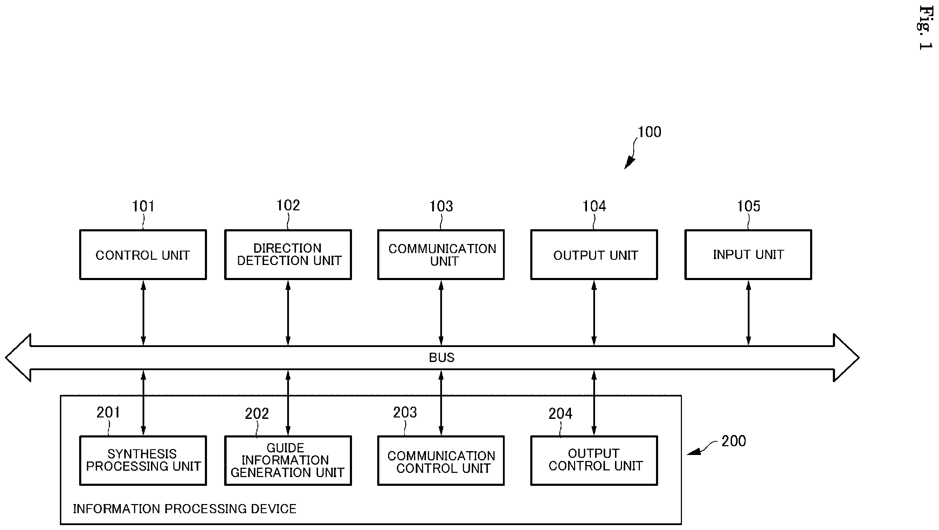

   Fig. 1 is a block diagram illustrating a configuration of a terminal apparatus and an information transmission device.
[Fig. 2]

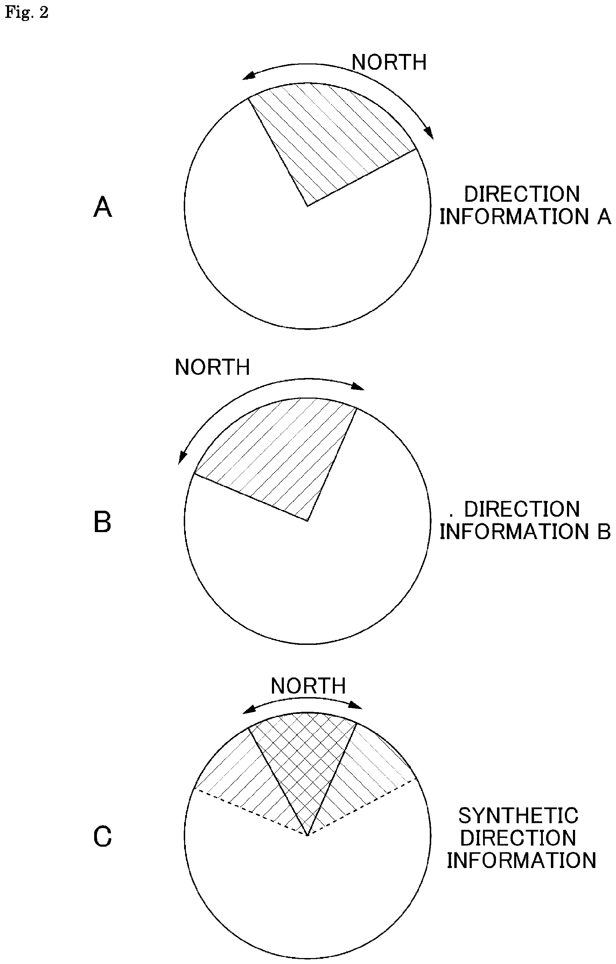

   Fig. 2 is an explanatory diagram of combining of direction information.
[Fig. 3]

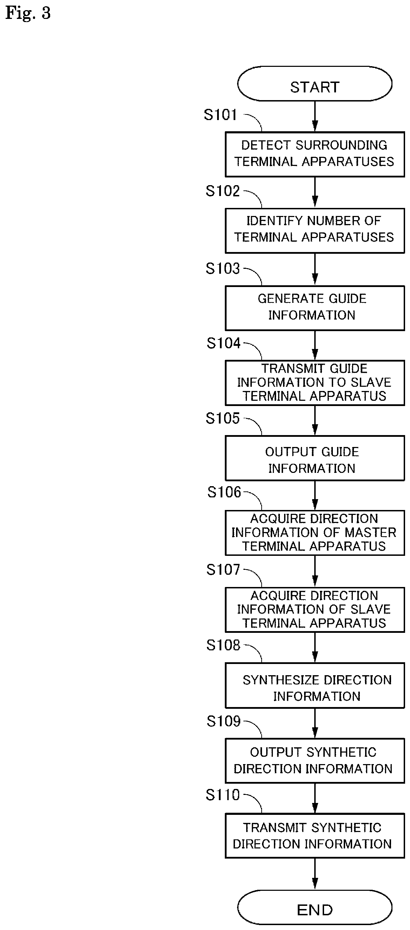

   Fig. 3 is a flowchart illustrating a processing flow of an information processing device in a master terminal apparatus.
[Fig. 4]

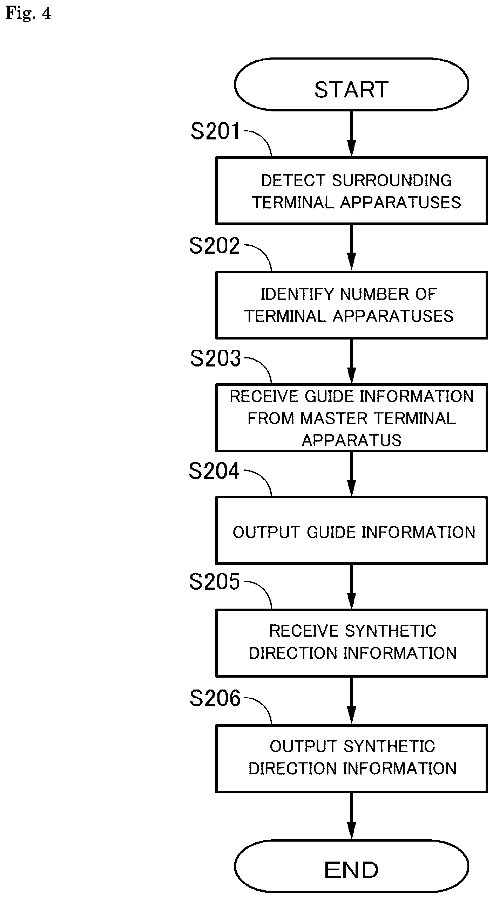

   Fig. 4 is a flowchart illustrating a processing flow of an information processing device in a slave terminal apparatus.
[Fig. 5]

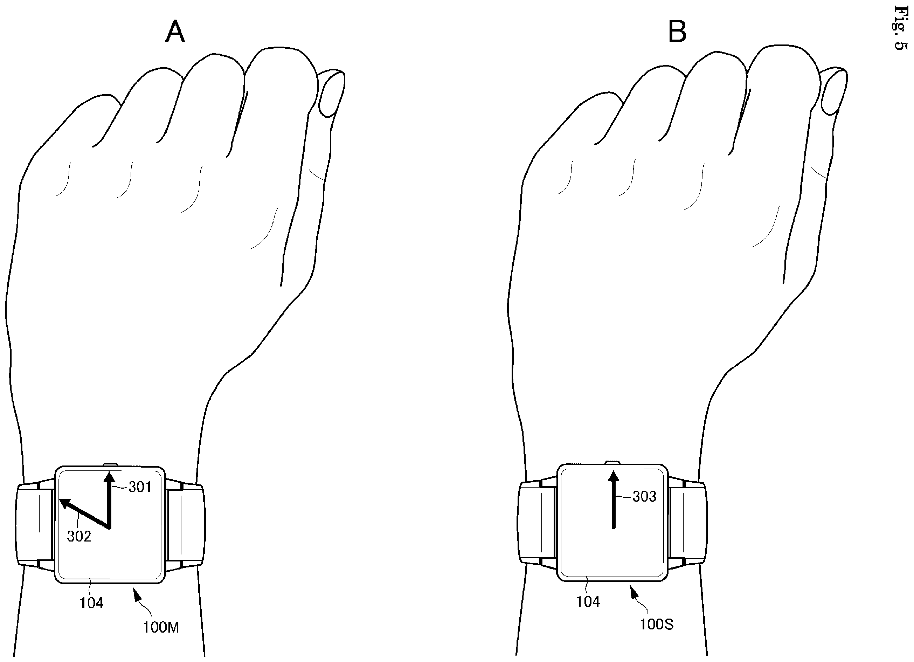

   Fig. 5A is a diagram illustrating a first output example of guidance information in the master terminal apparatus and Fig. 5B is a diagram illustrating a first output example of guidance information in the slave terminal apparatus.
[Fig. 6]

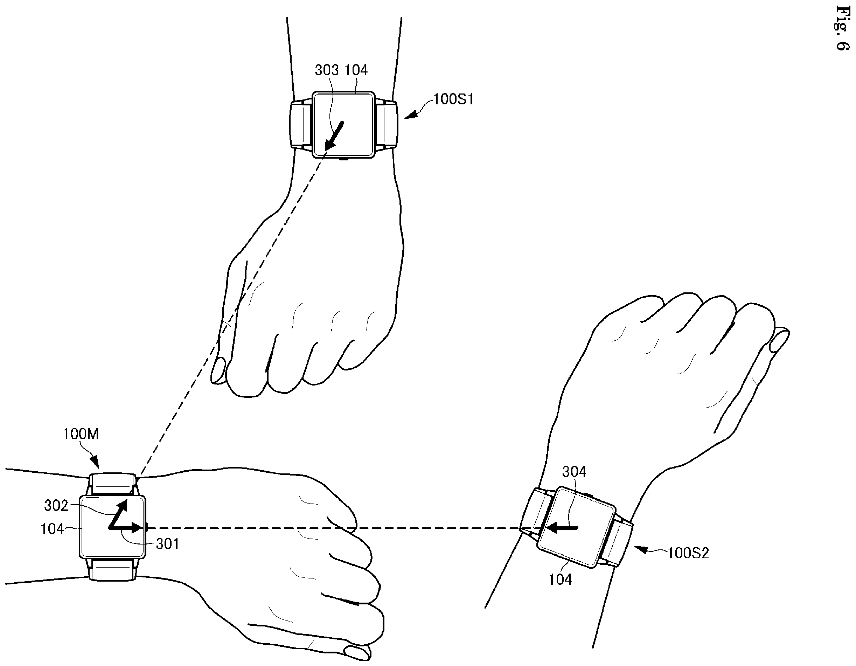

   Fig. 6 is an explanatory diagram of position adjustment of a terminal apparatus using guidance information.
[Fig. 7]

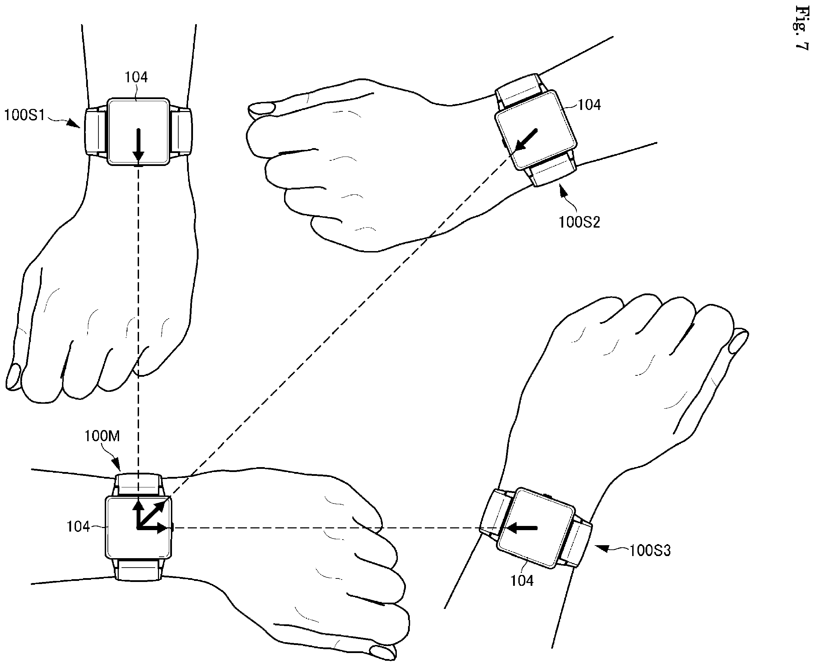

   Fig. 7 is an explanatory diagram of position adjustment of a terminal apparatus using guidance information.
[Fig. 8]

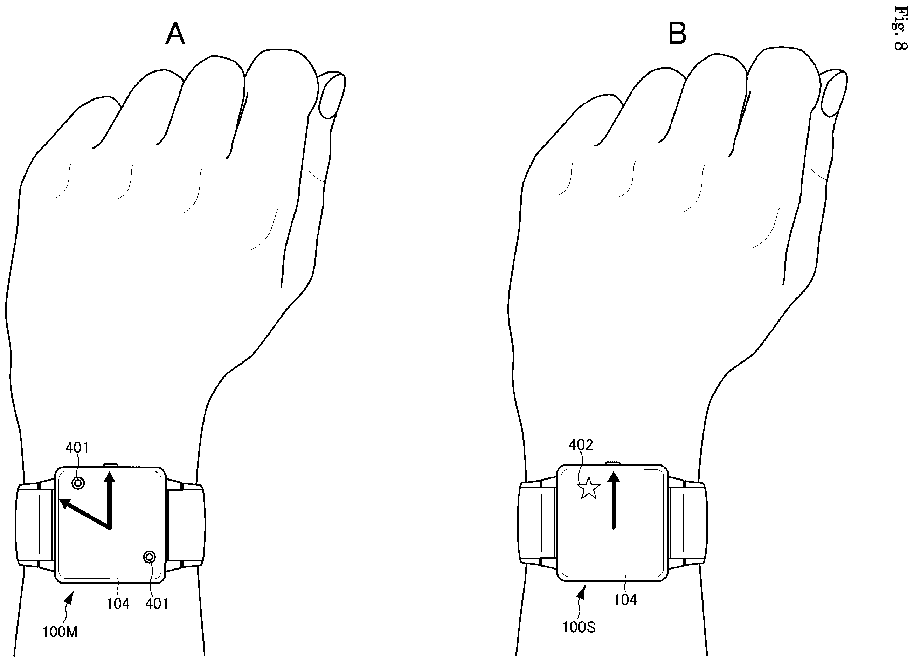

   Fig. 8A is a diagram illustrating a second output example of guidance information in the master terminal apparatus and Fig. 8B is a diagram illustrating a second output example of guidance information in the slave terminal apparatus.
[Fig. 9]

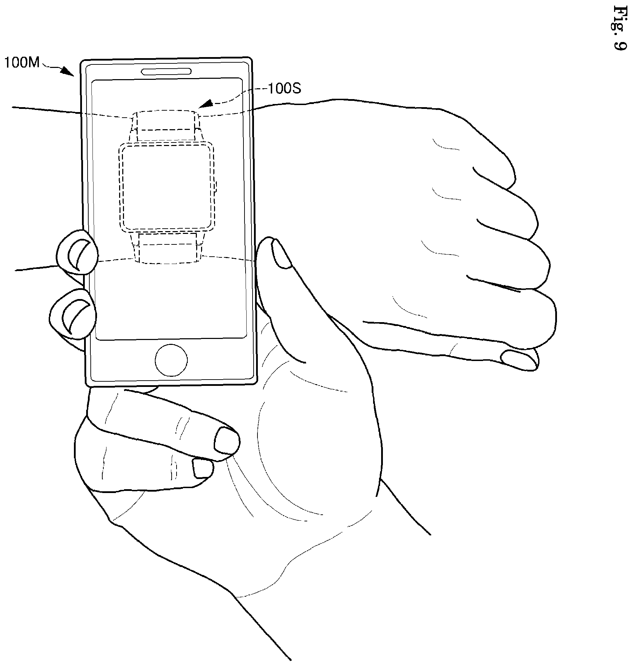

   Fig. 9 is a diagram illustrating another example of a terminal apparatus.
[Fig. 10]

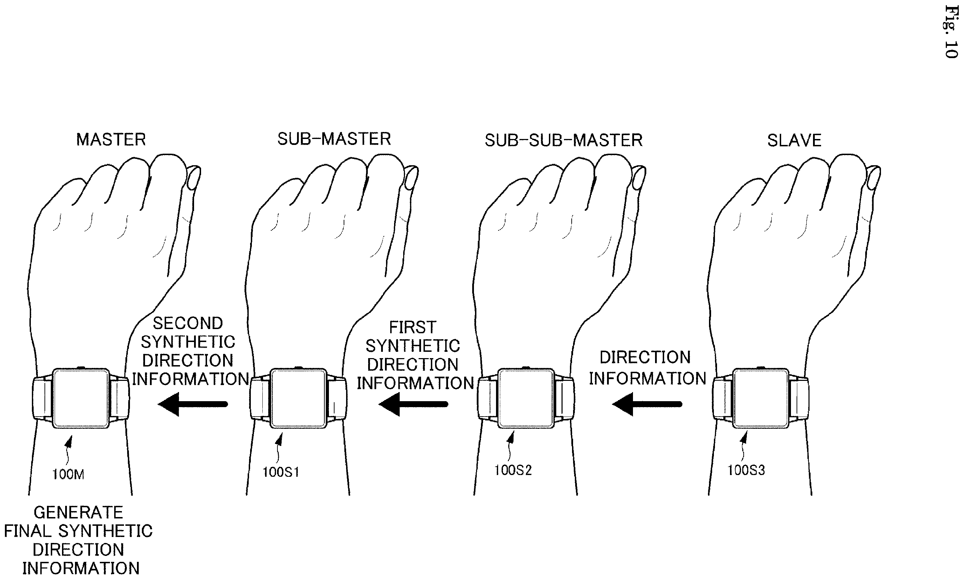

   Fig. 10 is a diagram illustrating a modified example of connection of a terminal apparatus.

### [Description of Embodiments]

Hereinafter, embodiments of the present technology will be described with reference to the drawings. The description will be given in the following order.

### <1. Embodiment>

[1-1. Configuration of terminal apparatus]
[1-2. Configuration of information processing device]
[1-3. Processing of information processing device in master terminal apparatus]
[1-4. Processing of information processing device in slave terminal apparatus]
[1-5. Output of guidance information]

### <2. Modified examples>

### <1. Embodiment>

### [1-1. Configuration of terminal apparatus]

Next, a configuration of a terminal apparatus 100 in which an information processing device 200 operates according to the present technology will be described with reference to Fig. 1. The information processing device 200 operates in the terminal apparatus 100 such as a watch type or wrist band type wearable device or a head mount display (HMD) for augmented reality (AR)/virtual reality (VR). Meanwhile, in the present technology, a terminal apparatus which receives direction information acquired in another terminal apparatus and generates combined direction information serves as a master among a plurality of terminal apparatuses including a function of the information processing device 200. In addition, a terminal apparatus which transmits direction information acquired thereby to the master serves as a slave. A terminal apparatus serving as a master is referred to as a master terminal apparatus 100M and a terminal apparatus serving as a slave is referred to as a slave terminal apparatus 100S.

The terminal apparatus 100 includes at least a control unit 101, a direction detection unit 102, a communication unit 103, an output unit 104, and an input unit 105.

The control unit 101 includes a central processing unit (CPU), a random access memory (RAM), a read only memory (ROM), and the like. The CPU performs various types of processing according to programs stored in the ROM to issue commands, thereby performing control of the entire terminal apparatus 100 and each component thereof.

The direction detection unit 102 is an inertial measurement unit (IMU) module or the like and detects a direction using a gyro sensor, an acceleration sensor, an angular velocity sensor, and the like in directions on 2 or 3 axes. The direction detection unit 102 provides detected direction information to the information processing device 200. Meanwhile, the direction detection unit 102 can also detect a posture, an inclination, and the like of the terminal apparatus 100.

The communication unit 103 is a communication module for performing communication between terminal apparatuses 100. As a communication method, any of wired communication, a wireless local area network (LAN), a wide area network (WAN), Wireless Fidelity (WiFi), a fourth generation mobile communication system (4G), Bluetooth (registered trademark), ZigBee, near field communication (NFC), infrared communication, and the like can be employed as long as communication can be performed between terminal apparatuses 100.

The output unit 104 is a display monitor configured as, for example, a liquid crystal display (LCD), a plasma display panel (PDP), an organic electro luminescence (EL) panel, or the like. The output unit 104 displays a user interface of the terminal apparatus 100, content such as images and video, guidance information in the present technology, and the like. Meanwhile, the output unit 104 may be a speaker which outputs sound.

The input unit 105 allows a user to input various instructions to the terminal apparatus 100. When the user performs an input to the input unit 105, a control signal according to the input is generated and supplied to the control unit 101. Then, the control unit 101 performs various types of processing corresponding to the control signal. The input unit 105 may be a touch panel, a touch screen integrated with a monitor, a microphone for audio input, or the like in addition to physical buttons.

The terminal apparatus 100 is configured as described above.

### [1-2. Configuration of information processing device]

Next, a configuration of the information processing device 200 will be described. As illustrated in Fig. 1, the information processing device 200 includes a combining processing unit 201, a guidance information generation unit 202, a communication control unit 203, and an output control unit 204.

The combining processing unit 201 combines direction information supplied from the direction detection unit 102 of the terminal apparatus 100 in which it functions and direction information transmitted from another terminal apparatus to generate new direction information (hereinafter referred to as combined direction information).

Here, combining of direction information is described. As an example, a case in which the north direction is detected through the direction detection units 102 of two terminal apparatuses 100 may be conceived. It is assumed that two pieces of direction information A and B respectively detected by the direction detection units 102 of the two terminal apparatuses 100 are as illustrated in Fig. 2A and Fig. 2B. An IMU module or the like serving as the direction detection unit 102 detects a direction with a certain range as indicated by a factor such as individual performances and thus the direction information has an error.

Accordingly, it is possible to acquire direction information with higher accuracy by combining two pieces of direction information to generate combined direction information as illustrated in Fig. 2C. According to this combining, the two pieces of direction information indicating the north direction are superposed and the superposed part is used as combined direction information that indicates the north direction more specifically.

Although pieces of direction information acquired by two direction detection units 102 are combined to obtain combined direction information in Fig. 2, three or more pieces of direction information may be acquired. As the number of pieces of direction information combined increases, the accuracy of combined direction information increases.

In direction detection according to the direction detection unit 102, the greater the number of direction detection units 102, the greater the extent to which the accuracy of direction detection can be increased using a larger number of pieces of direction information. However, the number of direction detection units 102 that can be mounted in the terminal apparatus 100 is limited due to factors such as a housing size of the terminal apparatus 100, and the like. Accordingly, in the present technology, direction information with higher accuracy is acquired by combining a plurality of pieces of direction information acquired through a plurality of direction detection units 102 mounted in a plurality of different separate terminal apparatuses 100.

The guidance information generation unit 202 determines a direction information acquisition position of a slave terminal apparatus 100S in a master terminal apparatus 100M on the basis of the number of slave terminal apparatuses 100S and generates guidance information for guiding the slave terminal apparatus 100S to the direction information acquisition position.

In a case where three or more terminal apparatuses 100 having the function of the information processing device 200 in direction information combining are used, all the terminal apparatuses 100 need not be aligned linearly, and slave terminal apparatuses 100S may not be disposed in directions different from the master terminal apparatus 100M. For example, in a case where a total of three terminal apparatuses including a single master terminal apparatus 100M and two slave terminal apparatuses 100S are used, guidance information may be generated such that the three terminal apparatuses are disposed at vertexes of an approximately triangular shape, as illustrated in Fig. 6. Meanwhile, a distance between the master terminal apparatus 100M and the slave terminal apparatus 100S may be any distance as long as it allows communication to be performed.

The generated guidance information is transmitted from the communication unit 103 of the master terminal apparatus 100M to the slave terminal apparatus 100S under the control of the communication control unit 203.

In the master terminal apparatus 100M, the communication control unit 203 controls the communication unit 103 such that it receives direction information transmitted from the slave terminal apparatus 100S and controls the communication unit 103 such that it transmits combined direction information to the slave terminal apparatus 100S. In addition, in the slave terminal apparatus 100S, the communication control unit 203 controls the communication unit 103 such that it transmits direction information to the master terminal apparatus 100M and controls the communication unit 103 such that it receives combined direction information transmitted from the master terminal apparatus 100M. Meanwhile, in a case where combined direction information is used only in the master terminal apparatus 100M, the combined direction information need not be transmitted to the slave terminal apparatus 100S.

In the master terminal apparatus 100M, the output control unit 204 controls the output unit 104 such that it outputs guidance information for guiding the slave terminal apparatus 100S to a position at which the slave terminal apparatus 100S acquires direction information (hereinafter referred to as a direction information acquisition position). In a case where the output unit 104 of the terminal apparatus 100 is a display monitor, a user interface display for displaying guidance information is controlled. Display of guidance information will be described later in detail. In addition, in a case where the output unit 104 of the terminal apparatus 100 is a microphone, control for outputting guidance information as sound from the microphone is performed.

In addition, in the slave terminal apparatus 100S, the output control unit 204 controls the output unit 104 such that it outputs guidance information for guiding the slave terminal apparatus 100S to a direction information acquisition position. User interface display is controlled in a case where the output unit 104 is a display monitor and audio output is controlled in a case where the output unit 104 is a microphone as in the case in the master terminal apparatus 100M.

Further, the output control unit 204 controls the output unit 104 such that it outputs combined direction information in any of the slave terminal apparatus 100S and the master terminal apparatus 100M. Accordingly, the user can ascertain the combined direction information. However, in a case where the combined direction information is used only in internal processing of a global positioning system (GPS), a position information system or the like, it is not necessary to output the combined direction information to the output unit 104 to present it to the user.

The terminal apparatus 100 and the information processing device 200 are configured as above. Meanwhile, although the direction detection unit 102, the communication unit 103, and the output unit 104 are provided in the terminal apparatus 100 in the above description, these may be included in the information processing device 200.

The information processing device 200 is configured using a program, and this program may be installed in the terminal apparatus 100 in advance, or downloaded or distributed by a storage medium or the like so that the user can install the program in the terminal apparatus 100 by himself or herself. Further, the information processing device 200 may be realized not only by a program but also as a combination of a dedicated device, a circuit, and the like using hardware having functions of the information processing device 200. In addition, a configuration in which the terminal apparatus 100 has the functions of the combining processing unit 201, the guidance information generation unit 202, the communication control unit 203, and the output control unit 204 may be employed instead of the configuration in which the terminal apparatus 100 has the functions of the information processing device 200.

### [1-3. Processing of information processing device in master terminal apparatus]

Next, processing of the information processing device 200 in the master terminal apparatus 100M will be described with reference to a flowchart of Fig. 3. In the following description, a case in which a total of three terminal apparatuses 100 including a single master terminal apparatus 100M and two slave terminal apparatuses 100S are used will be exemplified.

First, other terminal apparatuses 100 present around the master terminal apparatus 100M are detected in step S101. This detection can be performed by detecting communication signals used for communication between the terminal apparatuses 100, such as those of Bluetooth (registered trademark), for example.

Next, the number of detected terminal apparatuses 100 is identified in step S102. This is because direction information acquisition positions that are positions at which the terminal apparatuses 100 acquire direction information are determined in response to the number of detected terminal apparatuses 100. Here, the number of communication signals detected in step S101 may be regarded as the number of slave terminal apparatuses 100S

Next, guidance information is generated by the guidance information generation unit 202 on the basis of the number of slave terminal apparatuses 100S in step S103.

Next, the guidance information is transmitted to the slave terminal apparatuses 100S through the communication unit 103 according to control of the communication control unit 203 in step S104. This guidance information is presented to users of the slave terminal apparatuses 100S by being output through the output units 104 of the slave terminal apparatuses 100S.

Next, the guidance information of the slave terminal apparatuses 100S is output through the output unit 104 of the master terminal apparatus 100M according to the output control unit 204 in step S105. This guidance information of the slave terminal apparatuses 100S is information for guiding the slave terminal apparatuses 100S to direction information acquisition positions. The user of the master terminal apparatus 100M outputs an instruction to the users of the slave terminal apparatuses 100S according to the guidance information output from the master terminal apparatus 100M. The users of the slave terminal apparatuses 100S adjust the positions of the slave terminal apparatuses 100S (positions of the users carrying or wearing the terminal apparatuses 100) according to the instruction.

Meanwhile, the user of the master terminal apparatus 100M need not adjust the position of the master terminal apparatus 100M because the direction information acquisition positions of the slave terminal apparatuses 100S may be determined on the basis of the position of the master terminal apparatus 100M.

Next, the combining processing unit 201 of the information processing device 200 acquires direction information acquired by the direction detection unit 102 of the master terminal apparatus 100M in step S106.

Further, the combining processing unit 201 of the information processing device 200 acquires direction information acquired by the direction detection units 102 of the slave terminal apparatuses 100S and transmitted from the slave terminal apparatuses 100S in step S107.

Next, the combining processing unit 201 combines direction information acquired by all terminal apparatuses 100 to generate combined direction information in step S108.

Then, the combined direction information is output through the output unit 104 of the master terminal apparatus 100M according to control of the output control unit 204 in step S109. Accordingly, the user of the master terminal apparatus 100M can obtain direction information with high accuracy.

In addition, the combined direction information is transmitted to the slave terminal apparatuses 100S through the communication unit 103 according to control of the communication control unit 203 of the master terminal apparatus 100M in step S110. The combined direction information is also output through the output units 104 in the slave terminal apparatuses 100S so that the users of the slave terminal apparatuses 100S can obtain direction information with high accuracy.

As described above, processing of the information processing device 200 in the master terminal apparatus 100M is performed.

### [1-4. Processing of information processing device in slave terminal apparatus]

Next, processing of the information processing device 200 in a slave terminal apparatus 100S will be described with reference to a flowchart of Fig. 4.

First, other terminal apparatuses 100 present around the slave terminal apparatus 100S are detected in step S201. This detection can be performed by detecting communication signals used for communication between terminal apparatuses 100, such as those of Bluetooth (registered trademark), for example.

Next, the number of detected terminal apparatuses 100 is identified in step S202. This is because the arrangement of terminal apparatuses 100 changes in response to the number of detected terminal apparatuses 100.

Next, guidance information transmitted from the master terminal apparatus 100M is received in step S203.

Next, guidance information is output through the output unit 104 of the slave terminal apparatus 100S according to the output control unit 204 in the slave terminal apparatus 100S in step S204. A user of the slave terminal apparatus 100S adjusts his/her slave terminal apparatus 100S (the position of the user carrying or wearing the terminal apparatus 100) with reference to the guidance information output through the output unit 104.

Next, combined direction information generated by the information processing device 200 of the master terminal apparatus 100M and transmitted from the master terminal apparatus 100M is received in step S205.

Then, the combined direction information is output through the output unit 104 according to the output control unit 204 of the slave terminal apparatus 100S in step S206. Accordingly, the user of the slave terminal apparatus 100S can obtain direction information with high accuracy. Meanwhile, in a case where only the user of the master terminal apparatus 100M may need to ascertain the combined direction information, output of the combined direction information may not be performed in the slave terminal apparatus 100S.

As described above, the processing of the information processing device 200 in the slave terminal apparatus 100S is performed. Meanwhile, when the slave terminal apparatus 100S has arrived at a direction information acquisition position according to the guidance information, the user of the slave terminal apparatus 100S may visually confirm it and perform an operation such that direction information is transmitted to the master terminal apparatus 100M. In addition, direction information may be automatically transmitted from the slave terminal apparatus 100S to the master terminal apparatus 100M upon detection of arrival of the slave terminal apparatus 100S at a direction information acquisition position on the basis of position information acquired through a GPS or the like.

### [1-5. Output of guidance information]

Next, output of guidance information in the output unit 104 will be described. In this example, it is assumed that both the master terminal apparatus 100M and the slave terminal apparatus 100S are watch type wearable devices, the output unit 104 is a display monitor, and guidance information is presented to a user by being displayed on the display monitor.

In a first example of guidance information, an arrow indicating the direction of a direction information acquisition position at which the slave terminal apparatus 100S will arrive is displayed on the output unit 104 of the master terminal apparatus 100M, as illustrated in Fig. 5A. Since the position of the slave terminal apparatus 100S is determined on the basis of the position of the master terminal apparatus 100M and the master terminal apparatus 100M finally receives direction information from all slave terminal apparatuses 100S, arrows indicating direction information acquisition positions of all slave terminal apparatuses 100S may be displayed on the output unit 104 of the master terminal apparatus 100M when a plurality of slave terminal apparatuses 100S are present. Accordingly, in a case where there are two slave terminal apparatuses 100S, arrows 301 and 302 that are icons indicating the directions of direction information acquisition positions at which the two slave terminal apparatuses 100S will arrive are displayed, as illustrated in Fig. 5A. Meanwhile, any icon that can present a direction to a user may be used in addition to an arrow.

In the first example of guidance information, an arrow 303 indicating the direction of a position of the master terminal apparatus 100M in a state in which the slave terminal apparatus 100S has arrived at a direction information acquisition position is displayed on the output unit 104 of the slave terminal apparatus 100S, as illustrated in Fig. 5B. In other words, this arrow 303 can be said to be an arrow indicating a direction from the direction information acquisition position corresponding to the slave terminal apparatus 100S to the position of the master terminal apparatus 100M.

Then, the user of the master terminal apparatus 100M outputs a position adjustment instruction to the user of the slave terminal apparatus 100S while viewing the guidance information. In addition, the user of the slave terminal apparatus 100S adjusts the position of the slave terminal apparatus 100S such that arrow extending directions in the master terminal apparatus 100M and the slave terminal apparatus 100S are superposed to become an approximately straight line on the basis of the output guidance information and the instruction from the user of the master terminal apparatus 100M.

As illustrated in Fig. 6, in a case where there are two slave terminal apparatuses 100S, arrows 301 and 302 which are guidance information corresponding to the two slave terminal apparatuses 100S1 and 100S2 are displayed on the master terminal apparatus 100M.

Then, the slave terminal apparatus 100S1 is moved such that an extending direction of the arrow 301 displayed on the master terminal apparatus 100M and an extending direction of an arrow 303 displayed on any one of the two slave terminal apparatuses (slave terminal apparatus 100S1 in Fig. 6) are superposed to become an approximately straight line. In addition, the slave terminal apparatus 100S2 is moved such that an extending direction of the arrow 302 displayed on the master terminal apparatus 100M and an extending direction of an arrow 304 displayed on the other one of the two slave terminal apparatuses (slave terminal apparatus 100S2 in Fig. 6) are superposed to become an approximately straight line.

The slave terminal apparatus 100S1 and the slave terminal apparatus 100S2 transmit direction information to the master terminal apparatus 100M upon arrival at direction information acquisition positions. Then, combined direction information is generated by the information processing device 200 of the master terminal apparatus 100M.

In a case where three or more terminal apparatuses 100 having the functions of the information processing device 200 are used, it is desirable that all the terminal apparatuses 100 be not aligned linearly and slave terminal apparatuses 100S be disposed in directions different from the master terminal apparatus 100M. As described above, when three terminal apparatuses 100 are used as an example, it is desirable that the terminal apparatuses 100 be disposed in an approximately triangular shape.

Meanwhile, the number of terminal apparatuses 100 to be used may be three or more. In a case where there are a total of four terminal apparatuses 100 including a single master terminal apparatus 100M and three slave terminal apparatuses 100S1, 100S2 and 100S3, direction information acquisition positions may be disposed in an approximately quadrangular shape form such that they are not aligned linearly, as illustrated in Fig. 7.

Meanwhile, although it is desirable that direction information acquisition positions be located at vertexes of a triangular form or a square form such that they are not aligned linearly in the above-described embodiment, this disclosure does not exclude linear alignment of terminal apparatuses 100 from the present technology.

Meanwhile, when the slave terminal apparatus 100S has been moved to arrive at a direction information acquisition position, the output unit 104 may perform output for notifying the user of the arrival.

Further, since guidance information with respect to all slave terminal apparatuses 100S is output in the master terminal apparatus 100M, the user of the master terminal apparatus 100M can instruct the users of the slave terminal apparatuses 100S to move while viewing the guidance information.

Next, a second example of guidance information output will be described. In the second example, an icon 401 indicating a current position of the slave terminal apparatus 100S is displayed on the output unit 104 of the master terminal apparatus 100M in addition to the arrow of the first example, as illustrated in Fig. 8A. Meanwhile, icons indicating current positions of all slave terminal apparatuses 100S may be displayed on the master terminal apparatus 100M.

In addition, an icon 402 indicating a position at which the master terminal apparatus 100M is currently present is displayed on the output unit 104 of the slave terminal apparatus 100S in addition to the arrow of the first example, as illustrated in Fig. 8B.

By indicating current positions in this manner, it is possible to easily guide the slave terminal apparatus 100S to a direction information acquisition position. Meanwhile, a map image may be displayed on the output unit 104 in addition to display of the icons indicating positions as illustrated in Fig. 8.

Output of guidance information through audio may be performed instead of or in parallel with output of guidance information through display as described above. For example, the master terminal apparatus 100M may output guidance information for guiding slave terminal apparatuses 100S to direction information acquisition positions, such as "User of the first slave, please move to the left" and "Next user, please stand in the direction indicated by the arrow," as audio messages.

In addition, the slave terminal apparatus 100S may also output guidance information for guiding the user of the slave terminal apparatus 100S to a direction information acquisition position, such as "Please move to the right," as an audio message.

Meanwhile, in a case where there is a single master terminal apparatus 100M and a single slave terminal apparatus 100S, the positions of the master terminal apparatus 100M and the slave terminal apparatus 100S are always disposed in a straight line.

According to the present technology, it is possible to reduce noise and obtain direction information with high accuracy by sharing direction information between a plurality of terminal apparatuses 100 and generating combined direction information. Accordingly, it is possible to improve the reliability of a technology and service using direction information, for example, a navigation system.

The present technology can be applied to vehicles such as cars and bicycles. For example, in a case where cars include the direction detection unit 102 for automatic driving or a navigation system, it is possible to perform transmission and reception of direction information between a plurality of cars and generate combined direction information using the present technology to obtain more accurate direction information. This can be performed in a state in which a car is stopped in a parking lot, a state in which a car is stopped during traveling due to a signal or the like, a state in which a plurality of cars are traveling at approximately similar speeds, and the like.

Meanwhile, when the present technology is applied to vehicles in this manner, there are cases in which a user cannot ascertain transmission and reception of direction information and generation of combined direction information during driving and the like. Accordingly, a message such as "Direction information is currently being shared" may be displayed on a monitor or the like included in the vehicle to notify the user that processing is being performed.

### <2. Modified examples>

Although the embodiment of the present technology has been specifically described above, the present technology is not limited to the above-described embodiment, and various modifications based on the technical spirit of the present technology are possible.

The present technology can also be applied to information acquired by other sensors, such as position information obtained by a GPS and the like, in addition to direction information.

In both the master terminal apparatus 100M and the slave terminal apparatus 100S, each terminal apparatus 100 may include a single or a plurality of direction detection units 102. In a case where a single terminal apparatus 100 includes a plurality of direction detection units 102, direction information transmitted and received between terminal apparatuses 100 may be obtained by combining direction information acquired by a plurality of direction detection units 102.

The slave terminal apparatus 100S may continuously transmit direction information to the master terminal apparatus 100M at specific time intervals such that newest direction information at a point in time at which the slave terminal apparatus 100S arrives at a direction information acquisition position is used for combining processing.

In a case where there are two or more slave terminal apparatuses 100S, guidance information may be transmitted from the master terminal apparatus 100M to each slave terminal apparatus 100S to adjust the position of each slave terminal apparatus 100S or guidance information may be simultaneously transmitted to the plurality of slave terminal apparatuses 100S to simultaneously adjust the positions of the plurality of slave terminal apparatuses 100S.

Meanwhile, guidance information may be output only in the master terminal apparatus 100M without being output to the slave terminal apparatus 100S and the user of the master terminal apparatus 100M may instruct the user of the slave terminal apparatus 100S to adjust the position according to the guidance information.

Although an example in which the information processing device 200 is applied to a wearable device worn by a user has been described in the embodiment, the terminal apparatus 100 may be installed on the ground or the like and combining of direction information may be performed.

In addition, different types of terminal apparatuses may be used as illustrated in Fig. 9. In the example of Fig. 9, a smartphone is used as the master terminal apparatus 100M and a wearable device is used as the slave terminal apparatus 100S. In this case, the smartphone serving as the master terminal apparatus 100M and the wrist type wearable device serving as the slave terminal apparatus 100S are caused to approach to a position at which short range communication can be performed. Then, direction information is transmitted and received and combining of the direction information is performed. Meanwhile, the smartphone may be used as the slave terminal apparatus and the wearable device may be used as the master terminal apparatus.

In a case where the master terminal apparatus 100M and three or more slave terminal apparatuses 100S are present, when the master terminal apparatus 100M is burdened with all types of processing such as direction information combining processing, load increases and thus a time may be taken for processing. Accordingly, it is possible to reduce processing load of the master terminal apparatus 100M according to the configuration as below. In the following description, it is assumed that there are three slave terminal apparatuses 100S1, 100S2 and 100S3, as illustrated in Fig. 10.

In a case where the master terminal apparatus 100M is connected to the slave terminal apparatuses 100S1, 100S2 and 100S3, the master terminal apparatus 100M assigns one (slave terminal apparatus 100S1 in Fig. 10) of the slave terminal apparatuses as a sub-master.

The slave terminal apparatus 100S1 assigned as the sub-master assigns one (slave terminal apparatus 100S2 in Fig. 10) of the remaining slave terminal apparatuses as a sub-sub-master. In this case, the slave terminal apparatus 100S3 that is the remaining slave terminal apparatus serves as a slave. In this manner, the master and slaves are connected such that they have a hierarchical structure.

Then, the slave terminal apparatus 100S2 that is the sub-sub-master receives direction information from the slave terminal apparatus 100S3 and combines the received direction information and direction information detected by the direction detection unit 102 thereof to generate combined direction information (referred to as first combined direction information). Then, the first combined direction information is transmitted to the slave terminal apparatus 100S1 that is the sub-master.

The slave terminal apparatus 100S1 that is the sub-master combines the first combined direction information and direction information detected by the direction detection unit 102 thereof to generate second combined direction information. Then, the second combined direction information is transmitted to the master terminal apparatus 100M that is the master.

Then, the master terminal apparatus 100M combines the second combined direction information and direction information detected by the direction detection unit 102 thereof to generate combined direction information (referred to as final combined direction information).

The final combined direction information is a combination of direction information of all terminal apparatuses, that is, the master terminal apparatus 100M, the slave terminal apparatus 100S1, the slave terminal apparatus 100S2, and the slave terminal apparatus 100S3. In this manner, all pieces of direction information are not concentrated on a single master terminal apparatus to generate combined direction information and each terminal apparatus only performs combining of two pieces of direction information in a hierarchical structure in combining processing, and thus processing load can be reduced to promote improvement of processing speed.

This connection configuration and processing are not limited to a case in which there are three slave terminal apparatuses and can be performed without being limited to the number of slave terminal apparatuses.

In addition, terminal apparatuses may be connected in a so-called tree structure, such as a structure in which two or more sub-sub-masters are connected to a sub-master, for example.

The present technology can also be configured as follows.
(1) An information processing device including
   a combining processing unit configured to combine a plurality of pieces of direction information detected by direction detection units in a plurality of apparatuses to generate combined direction information.
(2) The information processing device according to (1), including a guidance information generation unit configured to generate guidance information for guiding the apparatuses to positions for acquiring the direction information.
(3) The information processing device according to (2), including an output control unit configured to cause an output unit of the apparatus serving as a master among the plurality of apparatuses to output the guidance information for guiding the apparatus serving as a slave among the plurality of apparatuses to a position for acquiring the direction information.
(4) The information processing device according to (3), wherein the guidance information is information indicating a direction of the position for the direction information detection corresponding to the apparatus serving as the slave.
(5) The information processing device according to (3) or (4), wherein the guidance information is information indicating a current position of the apparatus serving as the slave.
(6) The information processing device according to any one of (3) to (5), wherein, when the plurality of apparatuses serving as slaves are present, the output unit outputs the guidance information with respect to all the apparatuses serving as slaves.
(7) The information processing device according to any one of (2) to (6), including an output control unit configured to cause an output unit of the apparatus serving as a slave among the plurality of apparatuses to output the guidance information for guiding the apparatus serving as a slave to a position for acquiring the direction information.
(8) The information processing device according to (7), wherein the guidance information is information indicating a direction in which the apparatus serving as a master is present in a state in which the apparatus serving as a slave has arrived at the position for acquiring the direction information.
(9) The information processing device according to (7) or (8), wherein the guidance information is information indicating a position at which the apparatus serving as a master is present.
(10) The information processing device according to any one of (1) to (9), including a communication control unit configured to control a communication unit of the apparatus serving as the master such that the communication unit receives the direction information transmitted from the apparatus serving as the slave.
(11) The information processing device according to any one of (1) to (10), including a communication control unit configured to control the communication unit of the apparatus serving as the master such that the communication unit transmits the combined direction information to the apparatus serving as the slave.
(12) The information processing device according to any one of (1) to (11), wherein the apparatuses are portable apparatuses and/or wearable devices.
(13) including, by a combining processing unit, combining a plurality of pieces of direction information detected by direction detection units in a plurality of apparatuses to generate combined direction information.
   An information processing method
(14) including, by a combining processing unit, combining a plurality of pieces of direction information detected by direction detection units in a plurality of apparatuses to generate combined direction information.
   An information processing method

### [Reference Sign List]

100 Terminal apparatus
104 Output unit
200 Information processing device
201 Combining processing unit
202 Guidance information generation unit
204 Output control unit

## Claims

1. An information processing device
comprising a combining processing unit configured to combine a plurality of pieces of direction information detected by direction detection units in a plurality of apparatuses to generate combined direction information.

2. The information processing device according to claim 1, comprising
a guidance information generation unit configured to generate guidance information for guiding the apparatuses to positions for acquiring the direction information.

3. The information processing device according to claim 2, comprising
an output control unit configured to cause an output unit of the apparatus serving as a master among the plurality of apparatuses to output the guidance information for guiding the apparatus serving as a slave among the plurality of apparatuses to a position for acquiring the direction information.

4. The information processing device according to claim 3, wherein
the guidance information is information indicating a direction of the position for the direction information detection corresponding to the apparatus serving as the slave.

5. The information processing device according to claim 3, wherein
the guidance information is information indicating a current position of the apparatus serving as the slave.

6. The information processing device according to claim 3, wherein,
when the plurality of apparatuses serving as slaves are present, the guidance information with respect to all the apparatuses serving as slaves is output in the output unit.

7. The information processing device according to claim 2, comprising
an output control unit configured to cause an output unit of the apparatus serving as a slave among the plurality of apparatuses to output the guidance information for guiding the apparatus serving as a slave to a position for acquiring the direction information.

8. The information processing device according to claim 7, wherein
the guidance information is information indicating a direction in which the apparatus serving as a master is present in a state in which the apparatus serving as a slave has arrived at the position for acquiring the direction information.

9. The information processing device according to claim 7,wherein
the guidance information is information indicating a position at which the apparatus serving as a master is present.

10. The information processing device according to claim 2,comprising
a communication control unit configured to control a communication unit of the apparatus serving as the master such that the communication unit receives the direction information transmitted from the apparatus serving as the slave.

11. The information processing device according to claim 1, comprising
a communication control unit configured to control the communication unit of the apparatus serving as the master such that the communication unit transmits the combined direction information to the apparatus serving as the slave.

12. The information processing device according to claim 1, wherein
the apparatuses are portable apparatuses and/or wearable devices.

13. An information processing method comprising,
by a combining processing unit, combining a plurality of pieces of direction information detected by direction detection units in a plurality of apparatuses to generate combined direction information.

14. An information processing method comprising,
by a combining processing unit, combining a plurality of pieces of direction information detected by direction detection units in a plurality of apparatuses to generate combined direction information.
